Europäisches Patentamt

**European Patent Office**

Office européen des brevets

(19)

(11) Publication number: **0 101 644**
A2

# EUROPEAN PATENT APPLICATION

(12)

(21) Application number: **83304624.6**

(22) Date of filing: **10.08.83**

(51) Int. Cl.³: **B 64 C 3/40**

(30) Priority: **25.08.82 JP 147099/82**

(43) Date of publication of application: **29.02.84**
**Bulletin 84/9**

(84) Designated Contracting States: **DE FR GB IT**

(71) Applicant: **FUJI JUKOGYO KABUSHIKI KAISHA,**
**7-2 Nishi Shinjuku 1-chome Shinjuku-ku, Tokyo (JP)**

(72) Inventor: **Horinouchi, Shigeru, 899-7 Yasuzuka**
**Mibu-Machi, Shimotsuga-Gun Tochigi-Ken (JP)**

(74) Representative: **Abbie, Andrew Kenneth et al, A.A.**
**THORNTON & CO. Northumberland House 303/306 High**
**Holborn, London, WC1V 7LE (GB)**

(54) **Variable sweep forward wing aircraft.**

(57) Each half wing (2) of a variable sweepforward wing air-
craft is pivotally supported at its root part on the fuselage (1)
and is adjustably set and locked at a sweep angle ranging from
a small sweepback angle to a relatively large sweepforward
angle. The setting and locking can be carried out automatically
in response to the flight speed or, alternatively, directly by the
pilot observing the speed indicator (14). In the case of a super-
sonic speed aircraft, the wing is set in the vicinity of zero
sweepforward angle at subsonic speed flight and at a large
sweepforward angle at supersonic speed flight thereby to
counter the rearward shifting of the aerodynamic center ac-
companying transition from subsonic speed to supersonic
speed and thereby to reduce trim drag.

1

# VARIABLE SWEEPFORWARD WING AIRCRAFT

## BACKGROUND OF THE INVENTION

This invention relates to aircraft with variable sweepforward wings and more particularly to a variable sweepforward wing aircraft which is so adapted that the sweepforward angle of the main wing can be set at the optimum value in accordance with the flight conditions.

In general, in an aircraft capable of flight at both subsonic speeds and supersonic speeds, the center of lift, or aerodynamic center of the main wing shifts widely as the flight speed varies between subsonic speed and supersonic speed. More specifically, the aerodynamic center during flight in the subsonic speed range is considered to be at a position at a distance of about 25 percent from the leading edge of the mean aerodynamic chord (or aerodynamic mean chord) of a total chord-length of 100 percent. This position is ordinarily forward of the center of gravity of the aircraft. It is known, however, that as the aircraft flight speed enters the supersonic speed region, the lift distribution in the chord direction varies, and the aerodynamic center shifts rearward to a point which is close to 40 to 50 percent of the chord length from the leading edge of the mean aerodynamic chord.

This shifting of the aerodynamic center between approximately 25 percent and approximately 45 percent

2

occurs somewhat suddenly at the transonic speed of sound (Mach 1), but the transition is continuous as will be apparent from an accompanying graph to be described later.

When the aerodynamic center shifts rearward in this manner as the flight speed varies from subsonic speed to supersonic speed, the aircraft tends to turn in pitching motion so that its nose descends. This tendency must be countered by a great downward force on the horizontal tail surface so as to maintain balance in pitch of the aircraft. As a consequence, the trim drag increases, whereby the flight performance suffers. This has been a problem in the prior art.

In one example of a measure for lessening the effect of this rearward shifting of the aerodynamic center in a conventional supersonic speed aircraft, the fuel within the aircraft is transferred to one or more tanks at the rear part of the airframe thereby to shift the center of gravity of the aircraft rearward and thereby to decrease the negative pitching moment acting on the aircraft.

The above described phenomenon of shifting of the aerodynamic center is not limited to aircraft with straight wings (i.e., wings extending perpendicularly to the X-axis of the body-axis system) and those with swept-back wings but occurs also with respect to aircraft of sweepforward wings having sweepforward angles wherein the wing tips are forward of the wing roots. The main wings of aircraft of this species known heretofore have been fixed relative to the fuselage, and the sweepforward angles have been unchangeable. For this reason, there has been the problem of a great drop in flight performance due to the above described increase in trim drag accompanying the shifting of the aerodynamic center which occurs in the transition from subsonic speed to supersonic speed.

Particularly in an aircraft with a variable sweepback wing, it has been the practice to place the main wing in a state substantially close to that of a straight wing for flight in the subsonic speed region to obtain maximum performance values such as endurance or range at subsonic speeds. Then, in the supersonic speed region, the main wing is swept back to a large sweepback angle thereby to reduce the wave drag. However, when the sweepback angle of the main wing is made large, the mean aerodynamic chord thereof itself is shifted aft, and, moreover, this takes place under supersonic speed conditions. This rearward shift is compounded by the aforedescribed rearward shift of the aerodynamic center to 40 to 50 percent of the mean aerodynamic chord, whereby the resultant rearward shift becomes extremely great, and there arises the problem of very large increase in the trim drag.

## SUMMARY OF THE INVENTION

Accordingly, it is an object of this invention to provide a variable sweepforward wing aircraft so constructed and arranged that, for flight in the subsonic speed region, the main wing can be placed in a state close to that of a straight wing suitable for subsonic speeds, and, moreover, for flight in the supersonic speed region, the main wing can be swept forward to a great sweepforward angle to reduce the wave drag and to suppress increase of the trim drag.

According to this invention, briefly summarized, there is provided a variable sweepforward wing aircraft having a fuselage and a main wing comprising starboard and port half wings, characterized in that each of said half wings is supported by a pivot shaft at the root part thereof on a respective part of the fuselage in a manner permitting said half wing to be swung variably around the pivot shaft and said half wings are adjustably set and locked at variable sweepforward angles relative to the fuselage by adjusting and locking means.

The nature, utility, and further features of this invention will be more fully indicated in the following detailed description with respect to preferred embodiments of the invention, reference being made to the accompanying drawings briefly described below.

## BRIEF DESCRIPTION OF THE DRAWINGS

In the drawings:

FIG. 1 is a schematic port or left-side elevation showing an aircraft in flight at a subsonic speed and indicating the position of the aerodynamic center and that of the center of gravity;

FIG. 2 is an elevation similar to FIG. 1 showing the same aircraft in flight at a supersonic speed and indicating the positions of the aerodynamic center and the center of gravity;

FIG. 3 is a graph indicating the relationship between the flight speed and the position of the aerodynamic center of a typical aircraft;

FIG. 4 is a graph qualitatively indicating relationships between drag coefficient and lift coefficient respectively in a case wherein the aerodynamic center has shifted rearward relative to the center of gravity and in a case wherein it has not;

FIG. 5 is a plan view showing one embodiment of the variable sweepforward wing aircraft according to this invention;

FIG. 6 is a left-side elevation of the same aircraft shown in FIG. 5;

FIG. 7 is a half plan view indicating the state of the main wing of the aircraft in flight at a supersonic speed;

FIG. 8 is a half plan view of the variable sweepforward wing aircraft showing another example of the actuator;

FIG. 9 is a block diagram indicating a mode of adjusting of the sweepforward angle of the main wing;

FIG. 10 is a schematic plan view indicating the positions of downward thrust nozzles of a vertical/ short take-off and landing (V/STOL) aircraft;

FIG. 11 is a left-side elevation showing a V/STOL air craft and indicating the state of jet flow at the time of its take-off; and

FIG. 12 is a schematic plan view indicating the state of air flow around the airframe of the aircraft.

DETAILED DESCRIPTION OF THE INVENTION

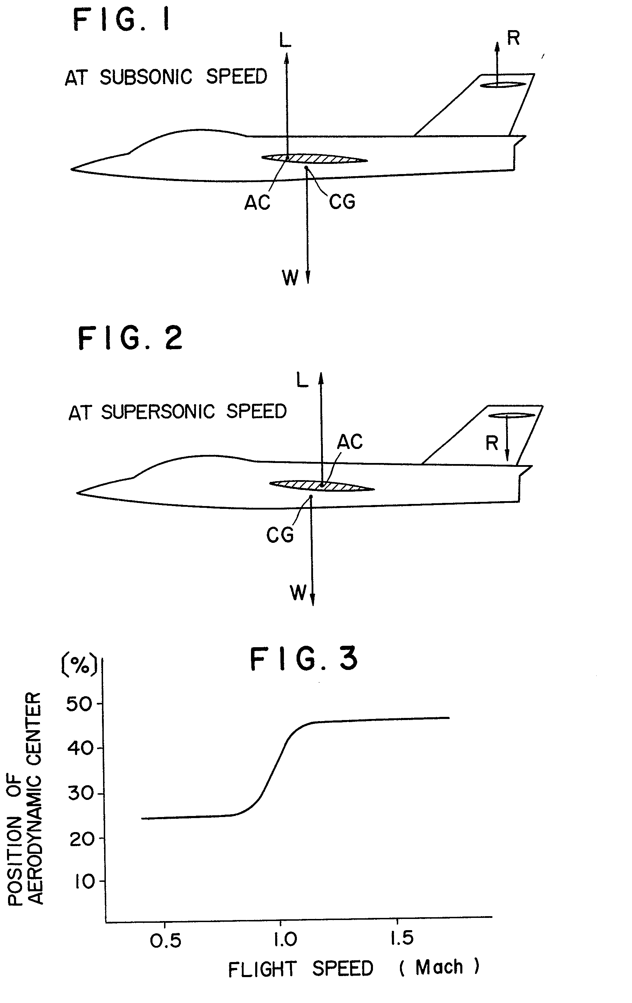

As conducive to a full understanding of this invention, certain general principles and phenomena will first be considered briefly with reference to FIGS. 1 through 4.

The relative positions of the aerodynamic center AC of the lift L of the main wing of an aircraft in flight and the center of gravity CG of the aircraft at a subsonic speed and at a supersonic speed, as described hereinbefore, are indicated respectively in FIGS. 1 and 2. The aforedescribed phenomenon of the rearward shifting of the aerodynamic center as the flight speed increases from the subsonic speed region to the supersonic speed region is indicated in these figures as well as in FIG. 3, which is a graph indicating the relationship between flight speed in Mach and the position of the aerodynamic center in percent of the mean aerodynamic chord from the leading edge. FIG. 3 indicates that the aerodynamic center position is substantially constant at about 25 percent at subsonic speeds but changes to approximately 40 to 50 percent as the flight speed enters the supersonic region. It also indicates that, while this transition is abrupt at approximately Mach 1, it is a continuous phenomenon.

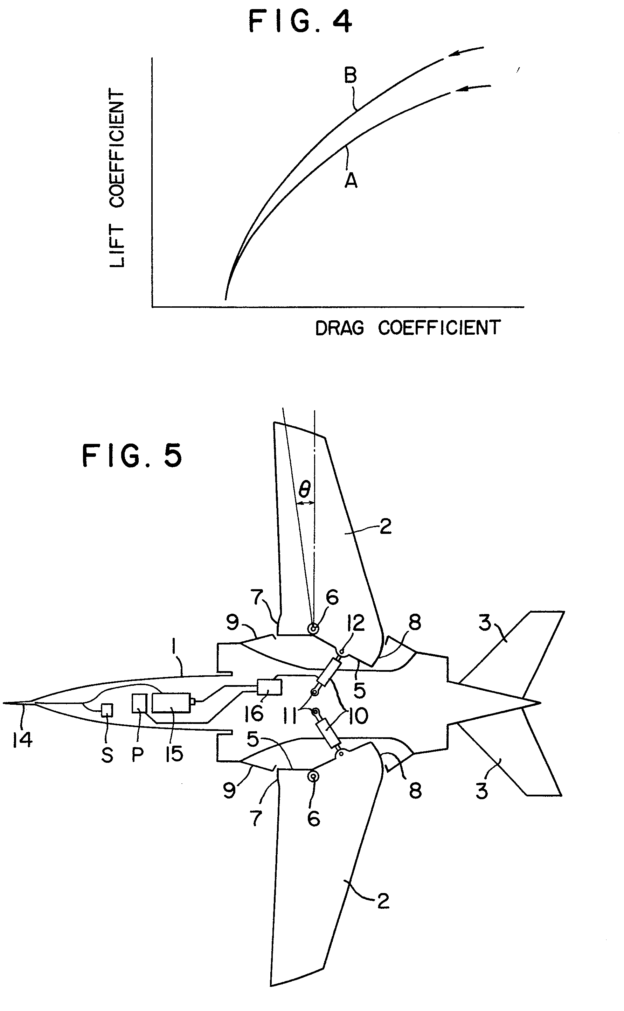

As mentioned hereinbefore, this rearward shifting of the aerodynamic center gives rise to an increase in the trim drag. The relationships between the total drag coefficient and the lift coefficient of an aircraft respectively for a case A in which this rearward shift of the aerodynamic center AC occurs and a case B wherein it does not occur are indicated in FIG. 4.

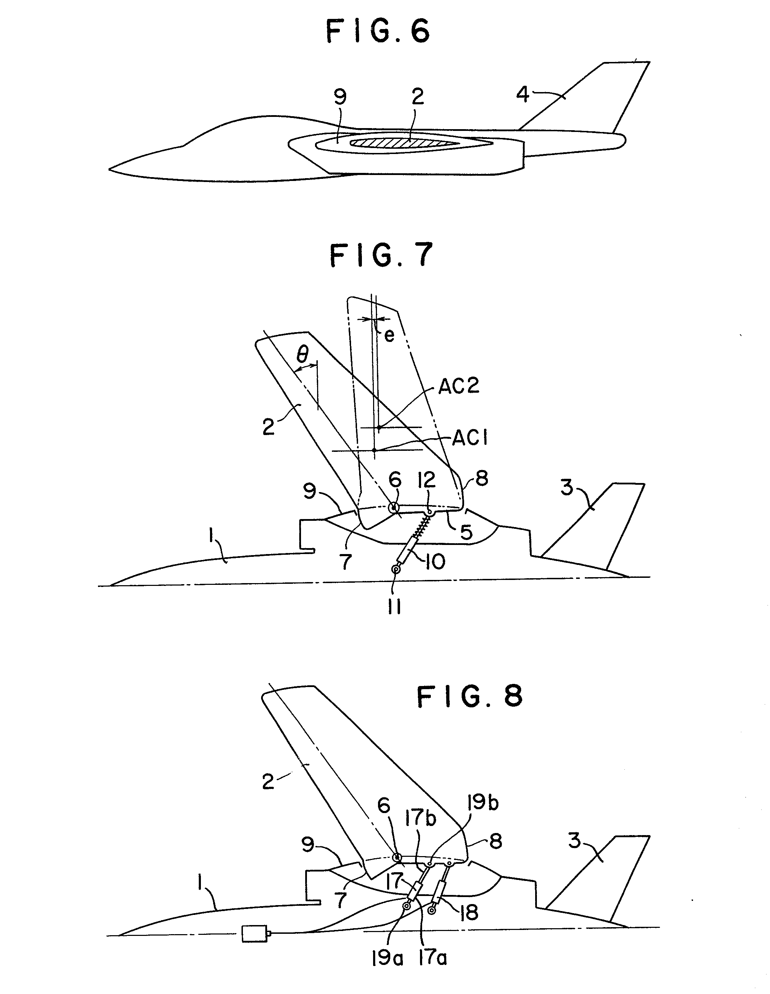

Referring now to FIGS. 5 and 6, the aircraft shown therein has a fuselage 1, a main wing comprising starboard and port half wings 2, a horizontal tail surface 3, and a vertical tail surface 4. Each half wing (hereinafter referred to as "wing") 2 is pivotally supported at its root part relative to the fuselage by a substantially vertical pivot shaft 6 so that it can rotate in a horizontal plane. The position of the pivot shaft 6 is set to be forward of the middle (50-percent) point of the wing chord. The leading edge 7 and the trailing edge 8 of the wing at its root part 5 are formed as parts of arcs, as viewed in plan view, respectively having centers at the axis of the pivot shaft 6. The root part 5 of the wing 2 is enclosed within a fairing 9, and the arcuate leading and trailing edge parts 7 and 8 at the root are of sufficient lengths so that there will be no gaps therein when the wing 2 is rotated about the pivot shaft 6.

Each wing 2 can be thus rotated about the pivot shaft 6 by a combined adjusting and locking means 10 as shown in FIG. 5 and, at the same time, is adapted to be locked at a set angular position relative to the fuselage 1. For this adjusting and locking means 10, a screw jack of the type having a stepless (or infinitely-variable) locking action and driven by a hydraulic motor is suitable. The stationary end of this adjusting and locking means 10 is pivotally connected by a pin 11 to the fuselage side, while the movable end thereof is pin-connected by a pin 12 to the root edge of the wing 2 at a point thereof spaced apart to the rear from the axis of the pivot shaft 6. Alternatively, the movable end of the adjusting and locking means 10 may be pin-connected to a part of the wing root at a position spaced apart forward of the pivot shaft 6.

Thus, by operating the adjusting and locking means 10 in extension or contraction, the sweepforward angle θ of each wing 2 can be adjusted as desired. FIG. 5 shows the wing 2 set at substantially zero sweepforward angle for subsonic flight, while FIG. 7 shows the wing 2 set at the sweepforward angle for supersonic flight. As is apparent from FIGS. 5 and 7, for flight at speeds in the subsonic region, the wing is set at a small sweepforward angle or even a small sweepback angle and a large lift-to-drag ratio of the aircraft is obtained thereby to obtain maximum cruising performance. On the other hand, for flight at speeds in the supersonic region, each wing 2 is swung forward to a large sweep-forward angle $\theta$ thereby to reduce the wave drag of the wing and, at the same time, to cause partial nullification or great reduction of the rearward shift of the aerodynamic center AC accompanying the variation of lift distribution by the forward sweep of the wing 2 itself, whereby the shifting distance e of the aerodynamic center from $AC_1$ to $AC_2$ can be held at a minimum value, and the trim drag can be greatly reduced.

The aircraft shown in FIG. 5 is provided with a pitot tube 14 to function as a speed sensor for measuring the flight speed of the aircraft (airplane or aeroplane). In the case of automatic piloting, a signal corresponding to the flight speed is generated by the speed sensor 14 and transmitted to an automatic piloting device, i.e., automatic pilot 15, which thereupon judges the flight speed and sends an output signal for setting the sweepforward angle to a control system 16. In response to this signal, the control system 16 activates each adjusting and locking means 10, which accordingly sets its wing 2 at the specific sweepforward angle dictated by the automatic pilot 15. After the wing sweepforward angle has been thus set, a lock mechanism (not shown) operates to cause each wing 2 to be fixed relative to the fuselage 1.

The above described operation relates to the case of automatic piloting. In the case of manual piloting, the human pilot P can visually read the speed indicator S and manually operate the control system 16.

In another example of the adjusting and locking means, as shown in FIG. 8, an adjusting means 17 for adjusting the sweepforward angle of each wing 2 and a locking means 18 for locking the wing 2 in its adjusted and set position are provided separately and in tandem. More specifically, for the adjusting means 17, a hydraulic piston-cylinder mechanism comprising a cylinder 17a and a piston 17b is used. The proximal end of the cylinder 17a is pin-connected by a pin 19a to the fuselage 1, while the outer working end of the piston 17b is pin-connected by a pin 19b to the root part of the wing 2. For the locking means 18, a screw jack provided with a stepless (or infinitely variable) locking mechanism is used. The wing 2 is pivotally supported by a pivot shaft 6 similarly as in the preceding embodiment. Both the adjusting and locking means 17 and 18 are disposed apart from the pivot shaft 6 at positions that are appropriate for effective function.

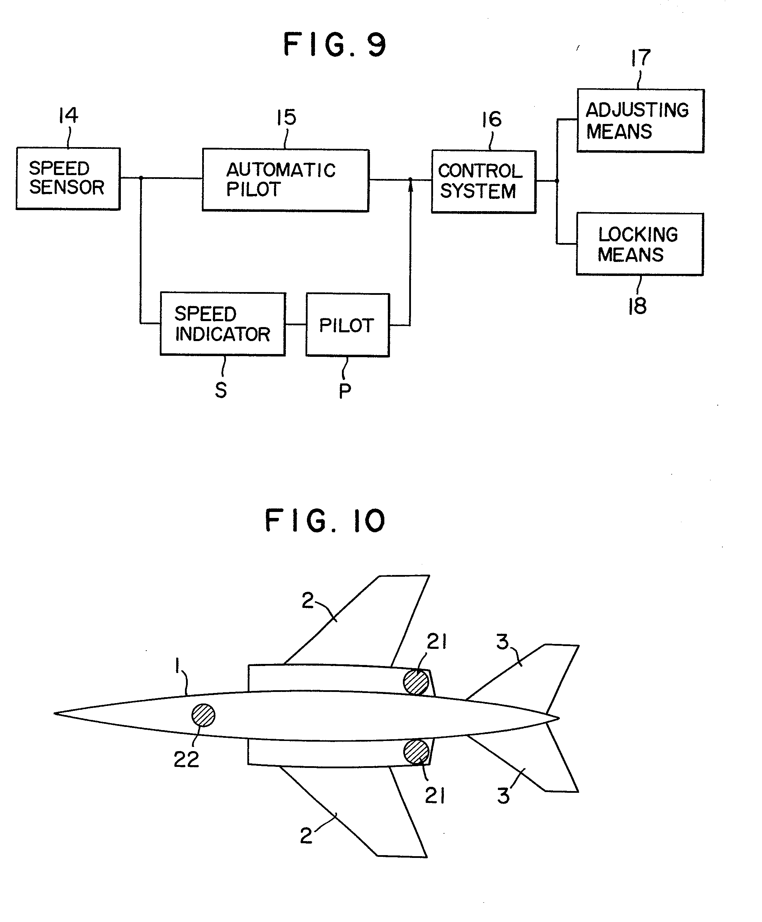

The essential elements and flow of signals or functional steps in the operation beginning with detection of the flight speed to the setting and locking of the wing are indicated by the block diagram in FIG. 9. The speed detection signal from the speed sensor 14 is transmitted to the automatic pilot 15, where the flight speed is judged, and then the appropriate command signal is sent by the automatic pilot 15 to the control system 16. In response to this signal, the control system 16 activates the adjusting means 17 and the locking means 18, whereby the wing 2 is set and locked at the optimum sweepforward angle. In addition to the flight speed, the angle of attack (angle of incidence) may also be sent as a signal to the automatic pilot 15.

In the case of manual operation, the pilot P visually reads the speed indicator and can directly operate the control system 16.

Next, the advantages derived by the application of this invention to vertical/short take-off and landing (V/STOL) aircraft will now be considered.

In a typical V/STOL aircraft, as shown in FIG. 10, exhaust-gas nozzles 21, 21 of the type for deflecting the thrust of the main engines are provided to the rear of the main engines, in the vicinity of the trailing edge of the wing, and on the starboard and port sides of the fuselage. In addition, for maintaining balance in pitch, a nozzle 22 of an auxiliary thrust system is provided at a forward part of the fuselage 1. When a V/STOL aircraft of this character is taking off, the total sum of the upward components $F_1$ and $F_2$ of the thrusts of the engines exceeds the total or gross weight of the aircraft thereby to lift the aircraft.

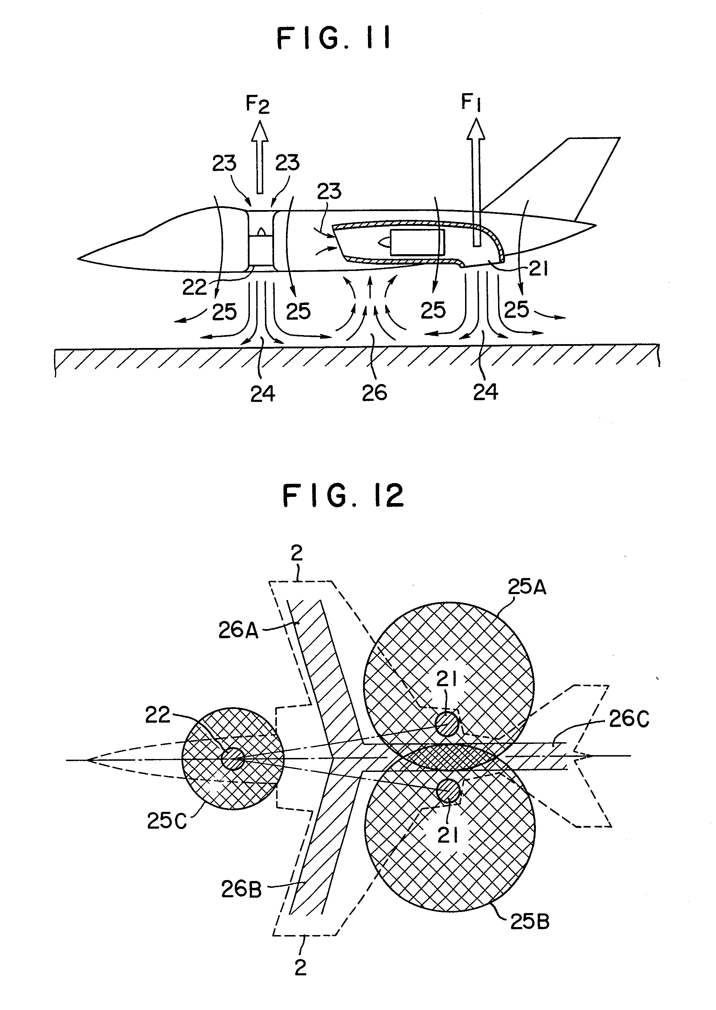

During this take-off and during landing, a complex air and gas flow pattern develops around the aircraft. The principal portions of this pattern are the flows 23, 23 of air drawn into the engines, flows 24 of jets ejected from the engines, flows 25 of air inductively swept by the jets and flowing therearound, and flows 26 of air and gas which have once reached the ground and are deflected upward. Of these flows of air and gas, those of upward and downward directions may be considered to be in regions which, when depicted in plan view, appear as shown in FIG. 12.

As indicated in FIG. 12, the flows around the nozzles 21 and 22 are in downward flow regions 25A, 25B, and 25C. The flows halfway between the nozzles, that is, the flows in the vicinities of lines bisecting substantially perpendicularly the lines joining the centers of the nozzles, are in upward flow regions 26A, 26B, and 26C. It is desirable that as much of the airframe as viewed in plan view as possible lie in the upward flow regions. Accordingly, the sweepforward position of the wing 2 covering the upward flow regions 26A and 26B is highly effective and advantageous.

However, a V/STOL aircraft cannot exhibit good level flight performance after takeoff unless the wing 2 is brought back to an angular position substantially perpendicular to the fuselage 1 or unless it swept forward to a great sweepforward angle. Thus, when this invention is applied to a V/STOL aircraft, it becomes possible to set the wing at the optimum sweep angles respectively for takeoff and level flight.

Furthermore, in the case where the aircraft is to be parked or hangared in a narrow place, it is possible to reduce the overall width of the airframe by sweeping the wing forward to an extreme position where it almost overlaps the fuselage.

As described in the foregoing disclosure, this invention provides a variable sweepforward wing aircraft in which each half wing is pivotally supported at its root part by a pivot shaft and is variable in sweep angle by an actuator. Accordingly, the main wing can be set at the optimum sweep angle in accordance with the flight speed. Therefore, even in a case where the position of the aerodynamic center shifts because of change in the flight speed, the distance of this shift of the aerodynamic center can be minimized by varying the angular position of the wing, whereby the trim drag can be reduced, and a drop in the flight performance can be prevented.

CLAIMS

1.      A variable sweepforward wing aircraft having a fuselage (1) and a main wing (2) comprising starboard and port half wings, characterized in that each of said half wings (2) is supported by a pivot shaft (6) at the root part thereof on a respective part of the fuselage (1) in a manner permitting said half wing to be swung variably around the pivot shaft and said half wings are adjustably set and locked at variable sweepforward angles relative to the fuselage by adjusting and locking means (10, 17, 18).

2.      A variable sweepforward wing aircraft according to claim 1 in which the adjusting means (17) comprises a fluid-operated piston-cylinder actuator for adjustably setting each half wing, said actuator being connected to and operating between a part of the fuselage and a root part of the corresponding half wing.

3.      A variable sweepforward wing aircraft according to claim 1 in which the movable end of the adjusting means (17) is pivotally connected to the root edge of the wing at a point thereof spaced apart rear from the axis of the pivot shaft (6).

4.      A variable sweepforward wing aircraft according to claim 1 in which the movable end of the adjusting means (17) is pivotally connected to the root edge of the wing at a point thereof spaced apart forward of the pivot shaft (6).

5.      A variable sweepforward wing aircraft according to claim 1 in which the locking means (18) comprises a screw jack mechanism having a stepless locking function, said screw jack mechanism being connected to and operating between a part of the fuselage and a root part of the corresponding half wing.

6.      A variable sweepforward wing aircraft according to claim 1, further comprising automatic control means (15, 16) operating in response to flight condition variables to automatically control the operation of the adjusting and locking means.

7.      A variable sweepforward wing aircraft according to claim 6 in which the automatic control means (15, 16) comprises an automatic pilot (15) receiving detection signals indicative of flight conditions including flight speed and operating in response to said detection signals to generate command signals, and a control system (16) receiving and operating in response to said command signals to control and activate the operation of the actuating and locking means.

8.      A variable sweepforward wing aircraft according to claim 1 which is capable of flight at subsonic and supersonic speeds, each half wing (2) being set and locked at zero sweepforward angle or at a small sweepback angle for subsonic speed flight and at a sweepforward angle for supersonic speed flight thereby to counter the rearward shift of the aerodynamic center accompanying transition of flight speed from subsonic speed to supersonic speed and thereby to reduce the trim drag.

9.     A variable sweepforward wing aircraft according to claim 1 which is a vertical/short take off and landing aircraft designed to enable the wing in sweptforward state to advantageously utilize upward flow of air and gas during take off and landing.

# FIG. I

AT SUBSONIC SPEED

AC   CG

# FIG. 2

AT SUPERSONIC SPEED

AC

CG

# FIG. 3

POSITION OF AERODYNAMIC CENTER (%)

50

40

30

20

10

0.5        1.0        1.5

FLIGHT SPEED ( Mach )

# FIG. 4

# FIG. 5

**F I G. 6**

**F I G. 7**

**F I G. 8**

# FIG. 9

# FIG. 10

FIG. II

FIG. I2